# DEMANDE DE BREVET EUROPEEN

(11) **EP 0 570 292 A1**
(43) Date de publication de la demande: **18.11.1993**
(21) Numéro de dépôt: 93401230.3
(22) Date de dépôt: 13.05.1993
(51) Int. Cl.: C07F 15/02, C07F 11/00, C07F 13/00, C07F 15/04, C07F 15/06, C09K 9/00, G02F 3/02, G09F 9/00, G11B 7/24

(54) **Complexes métal de transition-ligands et utilisation de ceux-ci pour le stockage optique d'informations**

(30) Priorité: 15.05.1992 FR 9205928
(71) Demandeur: CENTRE NATIONAL DE LA RECHERCHE SCIENTIFIQUE, 75007 Paris (FR)
(72) Inventeur: Zarembowitch, Jacqueline, F-75013 Paris (FR); Roux, Cécile, F-91400 Orsay (FR); Boillot, Marie-Laure, F-91640 Brus-sous-Forges (FR)
(74) Mandataire: Warcoin, Jacques

(57) **Abrégé**

La présente invention concerne des nouveaux complexes métal de transition-ligands, leur utilisation pour le stockage optique d'informations et une matrice solide associée auxdits complexes pour le stockage de l'information.

Le complexe métal de transition-ligand(s), dont le métal est susceptible de présenter une transition de spin thermoinduite, est caractérisé en ce qu'un ou plusieurs ligands L comprennent une ou plusieurs chaînes photo-isomérisables α-insaturées (isomérisation cis-trans), en ce qu'un ou plusieurs groupements anioniques X sont liés ou non à l'ion métallique et en ce que l'état de spin du métal peut être transformé en état de bas spin (BS) ou haut spin (HS) sous l'effet de la modification du champ de ligands induit par l'isomérisation desdits ligands isomérisables sous l'action d'une irradiation lumineuse.

Utilisation du complexe associé à une matrice pour le stockage optique d'informations.

## Description

La présente invention concerne de nouveaux complexes métal de transition-ligands, leur utilisation pour le stockage optique d'informations et un support pour le stockage optique de l'information constitué d'une matrice solide associée audit complexe.

Dans les champs de ligands octaédriques, les ions de métaux de transition avec des configurations d⁴, d⁵, d⁶ ou d⁷ adoptent généralement un arrangement électronique haut spin (HS) ou bas spin (BS), selon que l'énergie du champ est plus faible ou plus élevée respectivement que l'énergie d'appariement des électrons. Quand ces paramètres sont de magnitude comparable, une interconversion entre les deux états de spin peut se produire sous l'influence d'une perturbation extérieure telle que par exemple une variation de la température, de la pression ou une irradiation par de la lumière. Le phénomène a été appelé "changement de spin" ou de manière plus usuelle en anglais "spin-crossover". On peut également se référer à ce que l'on appelle "une transition de spin" ou un "équilibre de spin".

Pour les symétries inférieures à la symétrie octaédrique, les changements de spin sont en outre théoriquement permis pour les complexes de métaux de transition d⁸.

Les premiers exemples de changement de spin électronique ont été décrits en 1931 par Cambi et al, Atti. Accad. Naz. Lincei. 1931, 13, 809 qui observèrent des comportements magnétiques anormaux pour les composés tris (N,N-dialkyl-dithiocarbamato)fer(III) lorsque la température variait. Depuis, d'autres complexes présentant une telle propriété ont été découverts ou synthétisés. La plupart d'entre eux sont des dérivés du Fe(II) ou du Fe(III), et à un moindre degré des dérivés du cobalt(II).

Le phénomène de transition de spin s'accompagne d'une modification des propriétés magnétiques, électroniques, vibrationnelles et structurales des composés. Toutes ces propriétés peuvent être utilisées pour la détection de ce phénomène.

Cependant bien que ce phénomène de changement de spin ait été découvert depuis lontemps, il a seulement été étudié sur un plan à la fois théorique et expérimental depuis environ 25 années. Actuellement, I'intérêt croissant dans ce domaine est sans doute dû au moins partiellement aux éventuelles applications pratiques des complexes à changement de spin dans le stockage d'informations, l'affichage, et dans les dispositifs commutateurs ou faisant intervenir des signaux. En particulier, des systèmes qui présentent des transitions de spin discontinues avec un effet d'hystérésis semblent avoir des potentialités prometteuses à cause de leur caractère bistable.

Enfin, en 1990, Gütlich et Hauser, Coord. Chem. Rev. 1990, 97, 1, publièrent une revue d'ensemble sur l'effet appelé "LIESST", en anglais "Light-Induced Excited Spin State Trapping", c'est-à-dire sur la formation d'états excités HS à longue durée de vie par irradiation lumineuse, à basse température (≦40°K), des formes BS de complexes du fer(II) connus pour présenter une transition de spin thermoinduite. Dans ces complexes, le changement d'état de spin est dû à l'influence directe de la lumière sur l'état de spin du métal.

L'objet de la présente invention est de proposer des complexes métal de transition-ligands présentant une transition de spin thermoinduite et dans lesquels un changement d'état de spin peut être induit sous l'effet d'une irradiation lumineuse.

Un autre objet de la présente invention est de proposer des complexes métal de transition-ligands présentant une transition de spin thermoinduite et dans lesquels un changement d'état de spin peut être induit sous l'effet d'une irradiation lumineuse à une température plus élevée que celle nécessaire à l'observation de l'effet LIESST.

Un autre objet de la présente invention est de proposer des complexes métal de transition-ligands présentant une transition de spin thermoinduite et dont le changement d'état de spin peut être obtenu non par l'action directe de l'irradiation lumineuse sur les électrons du métal mais au moyen du changement du champ de ligands induit photo-chimiquement.

Selon l'invention, le complexe métal de transition-ligands présentant une transition de spin thermoinduite, est caractérisé en ce qu'un ou plusieurs ligands L comportent une ou plusieurs chaînes photo-isomerisables α-insaturées notamment isomérisation cis-trans, en ce qu'éventuellement un ou plusieurs groupements anioniques X sont liés ou non à l'ion métallique et en ce que l'état de spin du métal peut être transformé en état de bas spin (BS) ou haut spin (HS) sous l'effet de la modification du champ de ligand, induit par l'isomérisation desdits ligands isomérisables sous l'action d'un apport d'énergie extérieur électromagnétique, notamment une irradiation lumineuse.

Il a été trouvé en effet de façon inattendue que l'isomérisation de la double liaison induisait une variation dans le champ de ligands suffisant pour provoquer le changement de l'état de spin, et que ce changement pouvait être observé dans le domaine de température où les complexes formés avec les isomères cis et trans des ligands L étaient dans un état de spin différent. Il s'agit d'un effet nouveau à la connaissance du Demandeur.

Les symétries des champs de ligands utilisées sont de préférence octaédriques, mais d'autres symétries peuvent également convenir selon les métaux utilisés et leur degré d'oxydation.

La double liaison insaturée photoisomérisable (isomérisation cis-trans) est reliée à l'atome coordinant (atome participant avec le métal à la liaison de coordination) par un système électrons π. Par système électrons π, on entend soit un système aromatique, ou à doubles liaisons conjuguées ou les deux. Parmi les atomes coordinants qui sont bien connus de l'homme du métier, on peut citer selon les structures choisies, l'atome d'azote, de phosphore, d'oxygène, de soufre.

Parmi les métaux convenant dans le cadre de la présente invention, on peut citer notamment Fe(II), Fe(III), Co(II), Mn(II), Mn(III), Co(III), Ni(II), Mo(II). Parmi les métaux préférés, on peut citer Fe(II) ou Fe(III).

De préférence, les anions sont choisis parmi les anions suivants : CF₃SO₃⁻(triflate), CH₃-φ- SO₃⁻(tosylate), NCSe⁻, NCS⁻, NCBPh₃⁻, NCBH₃⁻, CN⁻, Br⁻, Cl⁻.

Les complexes selon l'invention peuvent posséder des ligands monodente, bidente, tridente, tétradente, pentadente, hexadente et peuvent être de manière connue neutre, anionique, cationique selon la charge du métal complexé.

De façon avantageuse, le ligand isomérisable sont des systèmes cycliques de formules : 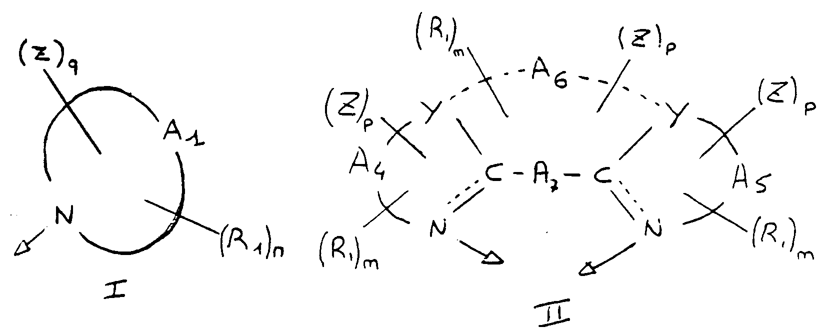
dans lesquelles :
A₁ représente une chaîne d'atome ayant :
au moins un atome d'azote, éventuellement un ou deux autres hétéroatomes (N,S,O,P), les autres atomes étant des atomes de carbone,
qui, ensemble avec l'atome d'azote, forment un cycle insaturé de cinq ou six atomes,
la chaîne A₁ étant éventuellement substituée en α - de N → par un groupe -CH₂NH₂, formant ainsi un ligand bidenté,
R₁ est une chaîne photo-isomérisable (isomérie cis, trans) de formule

-A₂=A₃-R₂ II

A₂ est choisi parmi l'atome d'azote ou les groupes CH, CR₃,
A₃ est choisi parmi l'atome d'azote ou les groupes CH, CR₃,
R₂, R₃ identiques ou différents représentent un radical hydrocarboné éventuellement substitué,
A₄, A₅ sont des chaînes de 2 ou 3 atomes dont un au moins est un atome de carbone et éventuellement un ou deux est un hétéroatome (N,S,O) formant avec les autres atomes du cycle un cycle insaturé, éventuellement A₆ est une chaîne divalente, éventuellement insaturée, de 1 ou 2 atomes (C,N,O,S,P), la chaîne A₆ pouvant elle-même être accolée à un autre cycle insaturé, notamment aromatique
Z identique ou différent est un radical donneur σ et/ou accepteur π
A₇ est une simple liaison ou lorsque A₆ n'existe pas, A₇ peut être également un atome d'oxygène, de soufre, de phosphore ou un groupe NH(ligand tridenté).
q est un nombre entier égal à 0, 1, 2, 3, 4, de préférence 1, 2,
n est un nombre entier égal à 1, 2, 3, de préférence 1, 2,
m est un nombre entier égal à 1, 2, 3, de préférence 1, 2,
p est un nombre entier égal à 0, 1, 2, 3, de préférence 0, 1,
le symbole ---- signifie que la double liaison peut être de nature oléfinique ou aromatique,
Y est un atome de carbone, d'azote, d'oxygène, de soufre ou de phosphore, un des atomes d'azote coordinants du complexe de formule II pouvant être remplacé par un atome de phosphore, de soufre, ou d'oxygène.

Par radicaux hydrocarbonés, on entend les radicaux aliphatiques saturés ou insaturés ou les radicaux aromatiques, notamment les radicaux alkyle (de préférence C₁-C₆ alkyle), cycloalkyle (de préférence C₃-C₇ cycloalkyle), aryle (de préférence C₆-C₁₀ aryle), aralkyle (de préférence C₇-C₁₁ aralkyle). Les substituants éventuels seront choisis parmi ceux qui augmenteront le champ de ligands.

Au sens de la présente invention, le terme α-insaturé signifie que la double liaison est reliée directement au cycle et peut être une liaison carbone-carbone, azote-carbone, carbone-azote, azote-azote.

Lorsque A₆ existe, le composé de formule II est un ligand bidenté à trois cycles accolés (ou plus si A₆ est elle-même une chaîne comportant un cycle accolé).

Lorsque A₆ n'existe pas le ligand bidenté a deux cycles reliés par une simple liaison ou par un héteroatome O, S, P ou un groupe NH.

Dans le cas où les complexes selon l'invention ne comprennent pas de ligands X, le réseau cristallin comprendra des contre-ions X⁻, en quantité appropriée.

Par irradiation lumineuse, on entend les ondes électromagnétiques connues pour induire un phénomène de photoisomérisation (UV et visible notamment).

De préférence, les systèmes cycliques de formule I et II sont multi-insaturés et avantageusement aromatiques.

Parmi ces systèmes cycliques de formule I et II, on peut citer avantageusement les systèmes choisis parmi les groupes suivants : pyridine, pyrazine, pyrimidine, pyrazidine, triazine, triazole, 2,2'-bipyridine, 1,10-phénanthroline, 2,2'-bipyrimidine, 2,2'-bi-4,5-dihydrothiazine, 2,2'-bi-2thiazoline.

Afin d'illustrer la signification du symbole ----- le lecteur averti comprendra que par exemple dans le cas de la 1,10-phénanthroline, le symbole correspond à une liaison aromatique. Au cas où les cycles ne sont pas aromatiques, le symbole ---- correspondra à une double liaison.

Les radicaux Z sont bien connus de l'homme du métier et l'invention n'est pas limitée à certains de ceux-ci. Néanmoins, parmi les radicaux convenant dans le cadre de la présente invention, on peut citer en ce qui concerne les radicaux donneurs σ , les radicaux suivants : alkyle, notamment C₁-C₆ alkyle, linéaires ou ramifiés.

Parmi les radicaux accepteurs π, on peut citer les radicaux : NO₂, COOH, COOalk, COalk, alk étant un radical C₁-C₆ alkyle.

Deux radicaux Z ensemble peuvent également former un cycle insaturé, de préférence aromatique avec les doubles liaisons des cycles des formules I et II.

A₂, et A₃ identiques ou différents sont de préférence choisis parmi l'atome d'azote ou les groupes CH ou CR₃ et R₂ est un radical hydrocarboné éventuellement substitué.

Les substituants de R₂ seront ceux qui augmenteront le champ de ligands, parmi lesquels on peut citer les radicaux C₁-C₆ alkyle, linéaires ou ramifiés, NO₂, COOH, COOalk, COalk, alk étant la signification indiquée ci-dessus.

De façon préférée, les complexes répondent aux formules suivantes : FeL₄X₂, FeL₂X₂, (L bidenté), [FeL₃]X₂ (L bidenté), [FeL₂]X₂-(L=tridenté).

De préférence encore, les ligands sont bidentés.

L'invention concerne également un procédé de préparation des complexes FeL₄X₂ consistant généralement à mettre en solution un sel MX₂ dans un solvant approprié alcoolique, hydroalcoolique, notamment méthanol-eau, chlorure de méthylène...., et à faire réagir le sel en solution avec un ligand L en suspension ou solution dans un solvant non complexant, à température ambiante ou d'ébullition du solvant, dans un rapport molaire approprié. La cristallisation est effectuée de façon connue par refroidissement, évaporation partielle ou totale du solvant ou une méthode analogue.

L'invention a également pour objet l'utilisation des complexes précédemment décrits à titre de commutateur optique dans la mesure où un processus de commutation lent n'est pas un inconvénient.

En effet, sous l'effet d'une perturbation extérieure constituée par une irradiation lumineuse notamment, le complexe métallique est susceptible de changer d'état de spin électronique, grâce à l'isomérie cis-trans des ligands isomérisables.

L'homme du métier déterminera aisément à l'aide de ses connaissances les longueurs d'ondes qui permettront aux complexes de passer de l'état bas spin à l'état haut spin et vice-versa.

Cette propriété permet également l'utilisation de ces complexes pour stocker l'information pendant une très longue durée.

Ainsi, l'invention concerne également l'utilisation de ces complexes pour le stockage optique de l'information.

Pratiquement, la photo-isomérisation est réalisée sur des composés incorporés dans une matrice solide ou éventuellement sous forme de gel, par exemple dans un polymère (acétate de polyvinyle, acétate de cellulose, ....). L'inscription et l'effacement s'effectuent par irradiation lumineuse. La lecture peut être réalisée au moyen de techiques optiques, magnétiques, etc.

On peut également envisager l'emploi de ces composés dans des dispositifs d'affichage, compte tenu du fait qu'ils changent de couleur selon l'état de spin du métal.

L'invention est maintenant illustrée par les exemples suivants donnés à titre indicatif.

Toutes les synthèses ont été effectuées sous argon suivant le même mode opératoire. Le méthanol anhydre utilisé a été obtenu par distillation sur CaO sous azote, puis séchage sur tamis moléculaire 3 A.

### Exemple 1

Préparation du complexe Fe(trans-4-styrylpyridine)₄(NCS)₂

A une solution de 0,67 mmole de FeSO₄, 7H₂O (187,4 mg) dans 4,5 ml de méthanol anhydre est ajoutée une solution de 1,34 mmole (130,0 mg) de KNCS dans 9 ml de méthanol anhydre. Le mélange est ensuite filtré et le précipité de Na₂SO₄ (ou K₂SO₄) lavé avec 2 ml de méthanol anhydre.

La solution de Fe(NCS)₂ obtenue est versée lentement à la température ambiante, sur une suspension de 2 mmole (363,8 mg) de trans-4-styrylpyridine dans 7 ml de méthanol (99 %) et 9 ml d'eau. Le précipité orange qui apparaît dès la fin de l'addition est isolé par filtration après 4 heures d'agitation à la température ambiante et séché une journée sous argon.

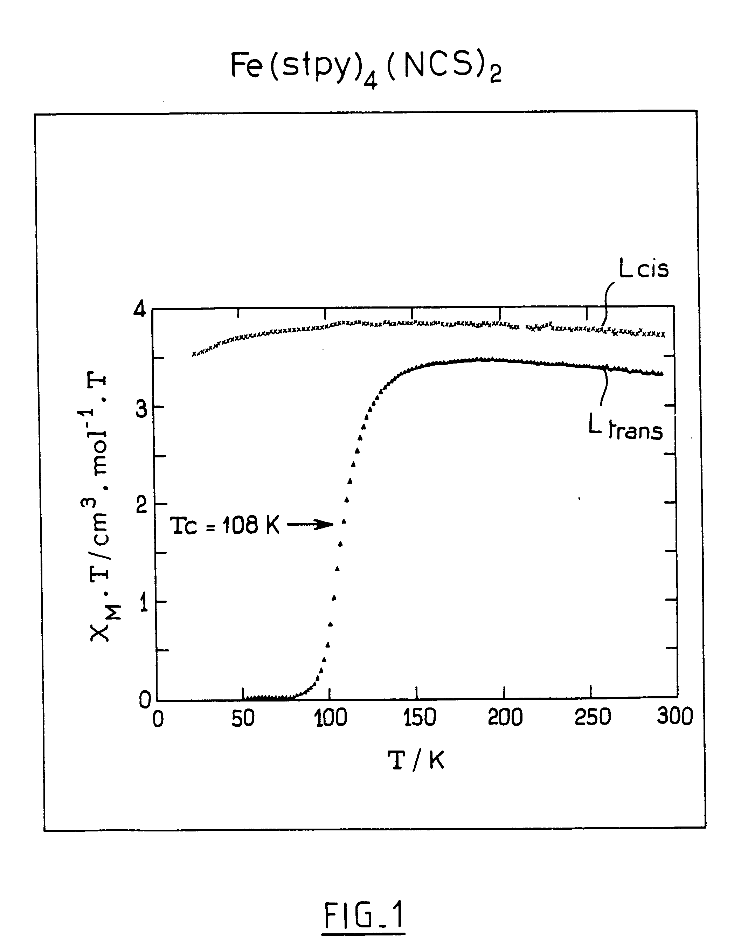

Les propriétés du complexe sont indiquées à la figure 1, dans laquelle est représentée le produit χT (χ susceptibilité magnétique molaire) en fonction de la température (°K).

### Exemple 2

Préparation du complexe Fe(trans-4-styrylpyridine)₄(NCBPh₃)₂

La préparation est effectuée selon le même mode opératoire que celui indiqué à l'exemple 1, mis à part le fait que le sel de sodium est le NaNCBPh₃.

### Exemple 3

Préparation du complexe Fe(trans-4-styrylpyridine)₄(NCBH₃)₂

La préparation est effectuée selon le même mode opératoire que celui indiqué à l'exemple 1, mis à part le fait que le sel de sodium est le NaNCBH₃.

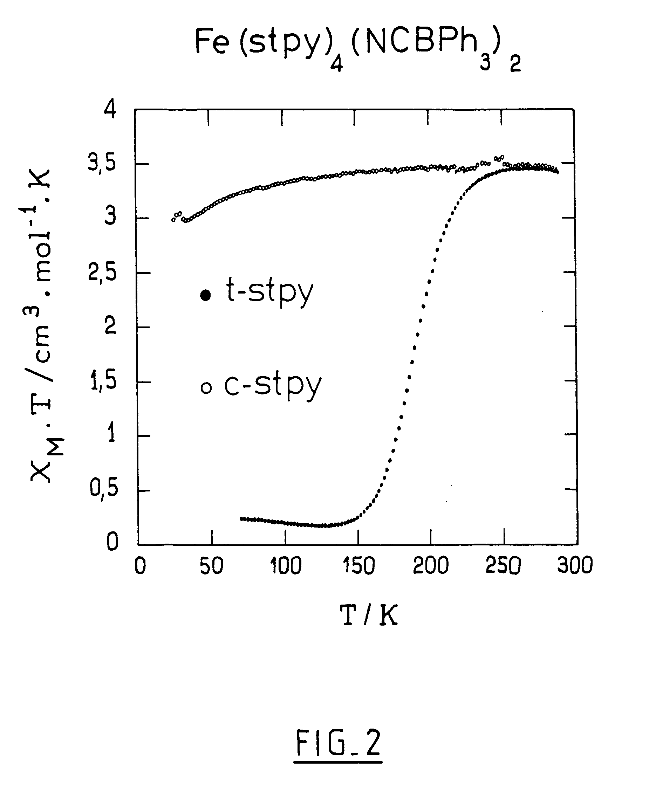

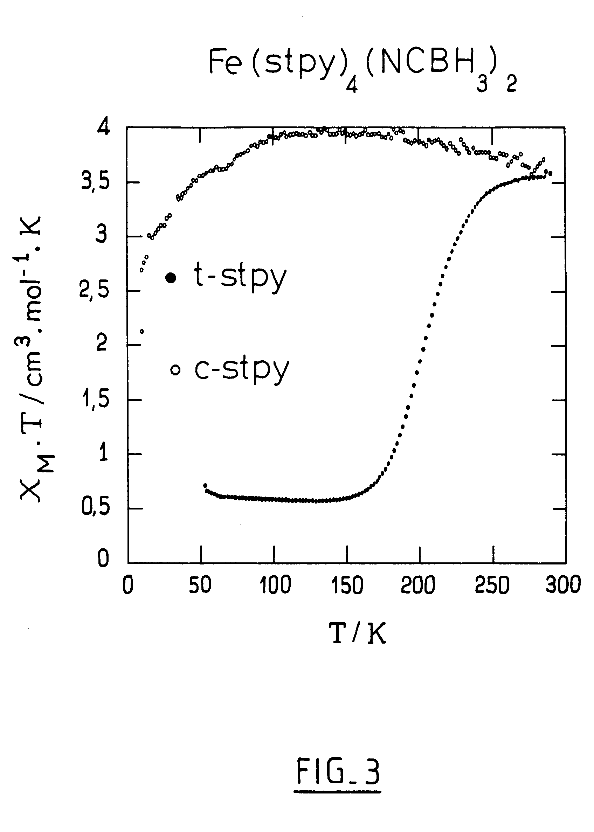

Les propriétés des complexes des exemples 2 et 3 sont représentées à la figure 2 et à la figure 3.

Les figures 1, 2, 3 représentent également l'évolution du produit χT avec la température pour les complexes homologues des précédents, formés avec la cis-4-styrylpyridine. Ces derniers présentent la forme haut spin à toute température. Ils sont obtenus suivant des modes opératoires identiques à ceux décrits dans les exemples 1, 2 et 3, la trans-4-styrylpyridine étant remplacée par la cis-4-styrylpyridine.

### Exemple 4

Préparation du complexe Fe(II)L₂(NCS)₂ avec L=(4-(trans-2-phényléthényl)-4'-méthyl)2,2'-bipyridine

La synthèse s'effectue en deux étapes :
Précurseur Fe(L)₃(NCS)₂ :

La solution de 67,3 mg (0,24 mmole) de FeSO₄, 7J₂O dans 3 ml de méthanol désoxygéné, est versée goutte à goutte dans un mélange comprenant 199,2 mg (0,73 mmole) de ligand L et 30 ml de méthanol. Après agitation de la solution rouge, à température ambiante, durant 4 heures, une solution aqueuse saturée en KNCS (environ 10 mmoles) est alors ajoutée. Le précipité rouge ainsi formé est filtré, rincé avec de l'eau et recristallisé avec un mélange méthanol/eau saturée en KNCS. Il est séché en dessicateur sous vide.
Préparation de Fe(L)₂(NCS)₂ :

Le composé Fe(L)₃(NCS)₂ est déshydraté à 80°C sous vide, puis extrait par de l'acétone sec dans un montage avec Soxhlet, durant 3 semaines. Le solide noir Fe(L)₂(NCS)₂ isolé dans la cartouche est séché au dessicateur sous vide.

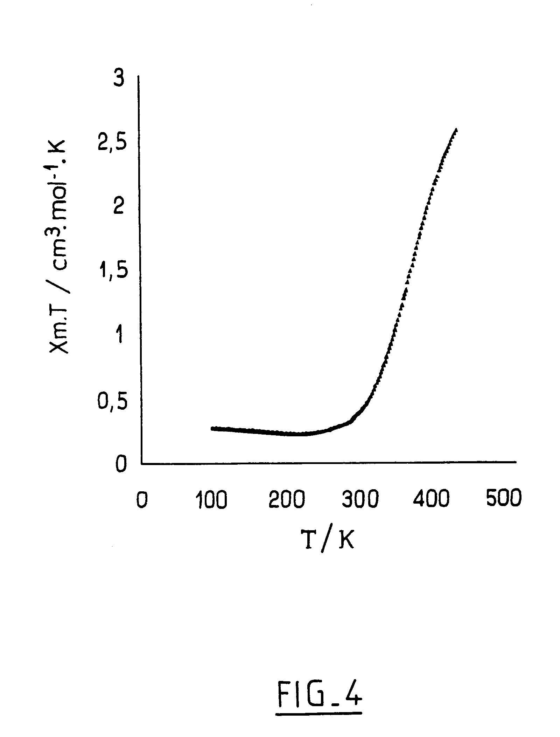

La courbe de magnétisme (χT = f(T)) de ce composé est donnée à la figure 4.

Bien entendu, l'homme du métier à la lecture de cet exposé comprendra que l'invention n'est pas limitée stricto sensu à celui-ci.

Notamment, il est de l'intention des inventeurs de couvrir par cette description tous les complexes équivalents, dans lesquels la variation du champ de ligand peut être induite par une modification photochimique du ligand.

Ainsi, l'homme du métier comprendra que l'on pourra remplacer la liaison insaturée en α- par un substituant énolique susceptible de se transformer en groupement cétonique sous l'effet d'une irradiation lumineuse.

## Revendications

1. Complexe métal de transition-ligand(s), ledit métal présentant une transition de spin thermoinduite, caractérisé en ce qu'un ou plusieurs ligands L comportent une ou plusieurs chaînes photo-isomérisables α -insaturées, notamment isomérisation cis-trans, la double liaison isomérisable cis-trans étant reliée à l'atome coordinant par un système électrons π, en ce qu'éventuellement un ou plusieurs groupements anioniques X sont liés ou non à l'ion métallique, et en ce que l'état de spin du métal peut être transformé en état de bas spin (BS) ou haut spin (HS) sous l'effet de la modification du champ de ligands induit par l'isomérisation desdits ligands isomérisables sous l'action d'un apport d'énergie extérieur électromagnétique, notamment une irradiation lumineuse.

2. Complexe selon la revendication 1, caractérisé en ce que le métal est choisi parmi les métaux suivants : Fe(II), Fe(III), Co(II), Mn(II), Mn(III), Co(III), Ni(II), Mo(II).

3. Complexe selon la revendication 1, caractérisé en ce que les anions sont choisis de préférence parmi les anions suivants : NCS⁻, NCSe⁻, NCBPh₃⁻, NCBH₃⁻, CN⁻, Br⁻, Cl⁻.

4. Complexe selon la revendication 1, caractérisé en ce que le ligand isomérisable sont des systèmes cycliques de formules : 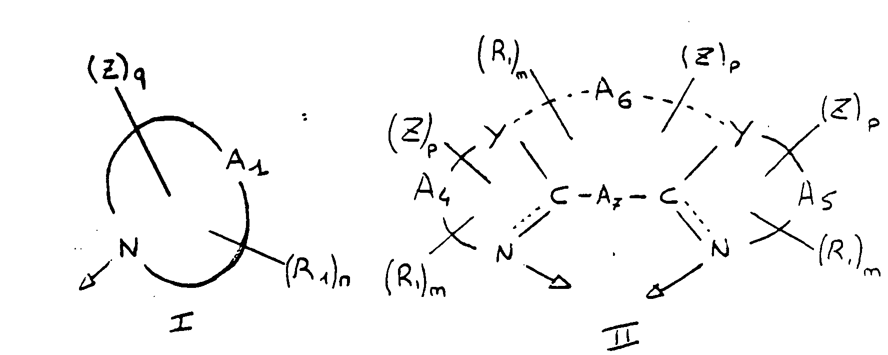 dans lesquelles :
A₁ représente une chaîne d'atome ayant :
au moins un atome d'azote, éventuellement un ou deux autres hétéroatomes (N,S,O,P), les autres atomes étant des atomes de carbone,
qui, ensemble avec l'atome d'azote, forment un cycle insaturé de cinq ou six atomes,
la chaîne A₁ étant éventuellement substituée en α- de N → par un groupe -CH₂NH₂, formant ainsi un ligand bidenté,
R₁ est une chaîne photo-isomérisable (isomérie cis, trans) de formule
-A₂=A₃-R₂ II
A₂ est choisi parmi l'atome d'azote ou les groupes CH, CR₃,
A₃ est choisi parmi l'atome d'azote ou les groupes CH, CR₃,
R₂, R₃ identiques ou différents représentent un radical hydrocarboné éventuellement substitué,
A₄, A₅ sont des chaînes de 2 ou 3 atomes dont un au moins est un atome de carbone et éventuellement un ou deux est un hétéroatome (N,S,O) formant avec les autres atomes du cycle un cycle insaturé, éventuellement A₆ est une chaîne divalente, éventuellement insaturée, de 1 ou 2 atomes (C,N,O,S,P) la chaîne A₆ pouvant elle-même être accolée à un autre cycle insaturé, notamment aromatique,
A₇ est une simple liaison ou lorsque A₆ n'existe pas, A₇ peut être également un atome d'oxygène, de soufre, de phosphore ou un groupe NH.
Z identique ou différent est un radical donneur σ et/ou accepteur π,
n est un nombre entier égal à 1, 2, 3,
m est un nombre entier égal à 1, 2, 3,
p est un nombre entier égal à 0, 1, 2, 3,
q est un nombre entier égal à 0, 1, 2, 3, 4
le symbole ---- signifie que la double liaison peut être de nature oléfinique ou aromatique,
Y est un atome de carbone ou d'azote, d'oxygène, de soufre ou de phosphore,
un des atomes d'azote coordinant du complexe de formule II pouvant être éventuellement remplacé par un atome de phosphore, de soufre ou d'oxygène.

5. Complexe selon la revendication 4, caractérisé en ce que les systèmes cycliques de formule I et II sont aromatiques.

6. Complexe selon la revendication 4, caractérisé en ce que les systèmes cycliques de formule I et II sont choisis parmi les systèmes cycliques suivants :
pyridine, pyrazine, pyrimidine, pyrazidine, triazine, triazole, 2,2'-bipyridine, 1-10-phénanthroline, 2,2'-bipyrimidine, 2,2'-bi-4,5-dihydrothiazine, 2,2'-bi-2thiazoline.

7. Complexe selon la revendication 4, caractérisé en ce que les radicaux Z sont choisis parmi les radicaux : NO₂, COOH, COOalk, COalk, alk étant un radical C₁-C₆ alkyle.

8. Complexe selon la revendication 4, caractérisé en ce que les radicaux Z sont choisis parmi les radicaux alkyle.

9. Complexe selon la revendication 4, caractérisé en ce que A₂, A₃ identiques ou différents sont choisis parmi N ou CH ou CR₃ et R₂ est un radical hydrocarboné éventuellement substitué.

10. Complexe selon la revendication 1, caractérisé en ce qu'il répond aux formules suivantes : FeL₄X₂, FeL₂X₂, (L bidenté), [FeL₃]X₂ (L bidenté), [FeL₂]X₂(L-tridenté).

11. Utilisation des complexes selon l'une des revendications 1 à 10, à titre de commutateur optique ou pour le stockage optique d'informations ou pour l'affichage.

12. Support solide pour le stockage optique de l'information ou la commutation ou l'affichage, constitué d'une matrice associée à des complexes selon l'une des revendications 1 à 10.
